# EUROPÄISCHE PATENTSCHRIFT

(11) **EP 1 228 924 B1**
(45) Veröffentlichungstag und Bekanntmachung des Hinweises auf die Patenterteilung: **29.04.2009**
(21) Anmeldenummer: 02002299.2
(22) Anmeldetag: 30.01.2002
(51) Int. Cl.: B60N 2/52

(54) **Fahrzeug-Sitzanordnung**
Vehicle seat arrangement
Système de siège de véhicule

(30) Priorität: 01.02.2001 DE 20101762 U
(43) Veröffentlichungstag der Anmeldung: 07.08.2002
(73) Patentinhaber: Wörndl, Matthias, 5431 Kuchl (AT); Rettenbacher, Josef, 5423 St. Koloman (AT)
(72) Erfinder: Wörndl, Matthias, 5431 Kuchl (AT); Rettenbacher, Josef, 5423 St. Koloman (AT)
(74) Vertreter: Schmitz, Hans-Werner

(56) Entgegenhaltungen:
- DE-A- 3 715 128
- DE-A- 4 441 892
- FR-A- 2 775 245
- US-A- 3 713 617
- US-A- 5 054 739

## Beschreibung

Die Erfindung bezieht sich auf eine Fahrzeug-Sitzanordnung nach dem Oberbegriff des Anspruchs 1.

Eine derartige Sitzanordnung ist aus der DE 44 41 892 C2 bekannt. Aufgrund beengter Platzverhältnisse in vielen Fahrzeugen kann jedoch die Verstelleinrichtung dieser bekannten Sitzanordnung nicht bei allen Fahrzeugtypen und Sitzarten Verwendung finden.

Bei einer bekannten, derzeit verwendeten, manuell verschwenkbaren Fahrzeug-Sitzanordnung, welche lediglich drei Einstellungen (0-Stellung und maximal rechts bzw. maximal links ausgeschwenkte Stellung) ermöglicht, ergeben sich folgende Nachteile:

Zunächst reichen drei Stellungen im Gelände mit wechselnden Hanglagen für eine optimale Anpassung der Sitzposition nicht aus. Ferner muss der Fahrersitz bei Schräglagenänderung im Gelände (z.B. bei der Fahrtrichtungsumkehr in Hanglage) von der äußerst linken auf die äußerst rechte Stellung geschwenkt werden. Hat der Fahrer in dieser Situation noch Zusatzgeräte (z.B. ein Mähwerk) zu bedienen, ist er gezwungen, während des Umstellvorganges das Fahrzeug zum Stillstand zu bringen.

Bei der Fahrzeug-Sitzanordnung, die aus der DE 37 15 128 A1 bekannt ist, ist eine Verstelleinrichtung zur selbsttätigen Verstellung des Fahrzeugsitzes in die waagrechte Position vorgesehen. Die Verstelleinrichtung ist hierbei als Drehmomenterzeugungsvorrichtung ausgebildet, welche bei Hanglage des Fahrzeugs ein von der Neigung des Fahrzeugs abhängiges Korrektur-Drehmoment erzeugt, welches dem durch die Schwerkraft bei Hanglage auf die Sitzanordnung einwirkenden Drehmoment entgegenwirkt.

Hierbei ergeben sich jedoch Nachteile, als nur relativ kleine Neigungswinkel überhaupt ausgeglichen werden können, da der Verstellweg durch die spezielle Sitzanordnung der DE 37 15 128 A1 stark beschränkt ist und die Hauptzielrichtung der Ausgleich von Querbeschleunigungen ist, was nur relativ kleine Verstellwege erforderlich macht. Ferner ist der Aufbau der gattungsgemäßen Fahrzeug-Sitzanordnung sehr aufwendig und erfordert eine mechanisch kompliziert aufgebaute Pendelanordnung, um die Neigung des Hanges erfassen zu können. Ferner muss bei der gattungsgemäßen Fahrzeug-Sitzanordnung auf Grund der speziellen Ausgestaltung die gesamte Regel- und Verstelleinrichtung im Fahrzeugsitz integriert sein, sodass bestehende Fahrzeugsitze nicht mit diesen Komponenten nachgerüstet werden können.

Eine weitere Fahrzeug-Sitzanordnung ist aus dem US-Patent 3,713,617 bekannt. Auch diese Anordnung weist einen komplizierten Aufbau auf, bei dem ebenfalls, wie im Falle der gattungsgemäßen Anordnung, die gesamte Regel- und Verstelleinrichtung im Sitz integriert sein muss. Ferner ist bei dieser Anordnung die Schwenkachse am Fahrzeugchassis fixiert, während der Fahrzeugsitz an einem Gehäuse der Regel- und Verstelleinrichtung fixiert ist. Dies erfordert zum Ausgleich von unterschiedlichen Hanglagen eine Verschwenkung des gesamten Gehäuses mit seiner Regel- und Verstelleinrichtung zusammen mit dem Fahrzeugsitz.

Eine weitere Fahrzeug-Sitzanordnung ist aus der EP 0 352 256 B1 bekannt. Diese Sitzanordnung weist eine automatische Nivelliereinrichtung auf, die als wesentliche Elemente eine Antriebsvorrichtung, eine Sensorvorrichtung zur Erfassung der Position des Sitzes und eine Anordnung aus zwei Platten aufweist. Hierbei dient die obere Platte zur Halterung des Sitzes, die wiederum an einer am Fahrzeug zu montierenden unteren Platte angelenkt ist. Die Antriebsvorrichtung ist hierbei zwischen der oberen und der unteren Platte vollständig in dem durch diese Platten begrenzten Raum angeordnet.

Mit anderen Worten wird bei dieser Fahrzeug-Sitzanordnung die Nivelliereinrichtung zwischen Fahrzeugboden und Fahrzeugsitz angebracht. Hierdurch ergibt sich ein relativ großer Schwerpunktabstand (Sitzreferenzpunkt) zum Drehpunkt, was bei dieser bekannten Anordnung wiederum relativ hohe Kräfte,auf die Verstelleinheit ergibt. Dies wiederum erfordert relativ große Abstände zwischen den Platten der bekannten Nivelliereinrichtung, die in dem genannten Patent mit 100 bis 110 mm angegeben sind. Hieraus wiederum ergibt sich das Problem, dass die bekannte Sitzeinrichtung in ihrer Verstellcharakteristik nervös und instabil empfunden wird. Schließlich fehlt bei der aus der EP 0 352 256 B1 bekannten Sitzanordnung die definierte Schwenkachse als Fahrzeuglängsachse.

Die US 5 054 739 zeigt eine Fahrzeugsitz-Anordnung mit der Merkmalen des Oberbegriffs des Anspruchs 1.

Es ist daher Aufgabe der vorliegenden Erfindung, eine Fahrzeug-Sitzanordnung der im Oberbegriff des Anspruchs 1 angegebenen Art zu schaffen, die einfach und robust aufgebaut ist, dem Fahrer in jeder Schräglage seines Fahrzeugs eine optimale Sitzposition ermöglicht, die eine Nachrüstung möglich macht, und die völlig im Fahrzeugsitz integrierbar ist.

Die Lösung dieser Aufgabe erfolgt durch die Merkmale des Anspruchs 1.

Die erfindungsgemäße Fahrzeug-Sitzanordnung macht es möglich, dass der Fahrer in jeder Schräglage des Fahrzeugs automatisch die für ihn beste Sitzposition einnehmen kann. Dies verhindert unangenehme Körperhaltungen und beugt langfristigen Gesundheitsschäden vor. Bei kritischen Fahrsituationen wird der Fahrer entlastet, da er sich in vollem Umfange auf den Fahrvorgang wie auch auf eventuell erforderliche Zusatzfunktionen konzentrieren kann. Dies erhöht die Fahrsicherheit wesentlich. Die erfindungsgemäße Fahrzeug-Sitzanordnung trägt somit zur Erhöhung des Bedienkomforts bei und entfallende Umstellvorgänge erbringen eine bedeutende Zeitersparnis.

Zu den weiteren besonderen Vorteilen der erfindungsgemäßen Fahrzeug-Sitzanordnung zählt, dass deren Verstelleinrichtung nur minimale Eingriffe in die Komponenten des Fahrzeugsitzes selbst erfordert. Diese beschränken sich auf das Vorsehen eines Übertragungsorganes, das vorzugsweise als Anlenkhebel ausgebildet ist, und mit der die Verschwenkbarkeit des Fahrzeugsitzes möglich machenden Drehwelle verbunden ist. Hierbei wird der Anlenkhebel innerhalb der Fahrzeugsitzkonstruktion selber angeordnet, sodass die Sitzfläche, die Sitzlehne und die Konsole des Fahrzeugsitzes im Wesentlichen nicht abgeändert werden müssen. Daher ergibt sich der besondere Vorteil, dass auch bestehende Sitzkonstruktionen problemlos mit der erfindungsgemäßen Verstelleinrichtung im Wege eines Nachrüstens versehen werden können. Gleichfalls ist es problemlos möglich, die erfindungsgemäße Fahrzeug-Sitzanordnung ab Werk mit der erfindungsgemäßen Verstelleinrichtung auszustatten. Des Weiteren ergibt sich der Vorteil, dass die erfindungsgemäße Sitzverstelleinrichtung einfach ein- und ausgeschaltet werden kann und dass alle serienmäßig vorgesehenen Sitzfunktionen beibehalten werden können. Hierzu zählt insbesondere auch eine Längsverstellung des Fahrzeugsitzes, also eine Verstellung des Fahrzeugsitzes in Fahrzeuglängsrichtung, um insbesondere den Abstand zum Lenkrad entsprechend den Bedürfnissen des jeweiligen Fahrers anpassen zu können.

Ferner ist es möglich, verschiedenste Antriebsvarianten für die Sitzverstellung vorzusehen. Vorzugsweise werden elektrische, hydraulische oder pneumatische Antriebe verwendet. Des Weiteren ermöglicht die erfindungsgemäße Fahrzeug-Sitzanordnung bzw. die erfindungsgemäße Verstelleinrichtung den Anschluss von Zusatzfunktionen, wie beispielsweise eine Waagerechthaltung des Ladegutes, falls der Fahrzeugsitz in einem beladbaren Fahrzeug angebracht ist.

Ferner ergeben sich Vorteile, da die Regelung der Fahrzeugsitzverstellung sehr leicht eingestellt werden kann, beispielsweise was die Trägheit der Verstellung bzw. den Anfangswert der Verstellung betrifft.

Ferner ist es möglich, die erfindungsgemäße Fahrzeug-Sitzanordnung mit einer optischen oder auch akustischen oder einer optisch-akustisch-kombinierten Warnanzeige bei Erreichen einer maximalen Schräglage zu versehen. Schließlich macht es die erfindungsgemäße Fahrzeug-Sitzanordnung möglich, die Sitzverstellgeschwindigkeit in Abhängigkeit von der jeweiligen Fahrgeschwindigkeit anzupassen bzw. zu verändern.

Die Unteransprüche haben vorteilhafte Weiterbildungen der Erfindung zum Inhalt.

Die besonderen Vorteile der erfindungsgemäßen Fahrzeug-Sitzanordnung mit integrierter Verstelleinrichtung werden nachfolgend nochmals zusammengefasst.

Der Einbau der Verstelleinrichtung erfolgt innerhalb der Sitzanordnung unmittelbar am Fahrzeugsitz (z. B. innerhalb des Federpaketes oder, entsprechend einer Ausführungsform der Fahrzeug-Sitzanordnung die nicht im Schutzumfang der Ansprüche enthalten ist, zwischen Federpaket und Sitzschale) und nicht, wie beim Stand der Technik, unterhalb des kompletten Sitzgestelles, so dass die Verstelleinrichtung nicht mit dem Fahrzeug selbst, sondern ausschließlich mit dem Fahrzeugsitz verbunden ist.

Diese Anordnung ergibt einen kürzeren Schwerpunktabstand (Sitzreferenzpunkt) zum Drehpunkt, was zunächst den Vorteil ergibt, dass die Verstelleinrichtung nicht das Gewicht des Federpaketes tragen muss. Somit werden geringere Kräfte auf die Verstelleinrichtung ausgeübt, was zu geringeren Verstellkräften führt, so dass die Verstelleinrichtung beispielsweise bei einem Schwenkwinkel von ca. +/- 15° nur etwa 50 mm hoch bauen muss. Dies ist besonders wichtig, da man beispielsweise von der Kabinenhöhe der Fahrzeuge, in denen die erfindungsgemäßen Fahrzeug-Sitzanordnung vorgesehen werden kann, häufig sehr begrenzt ist. Weiterhin bewegt man sich beim Schwenken aufgrund dieser Anordnung wesentlich weniger weit weg von den Bedienungselementen des Fahrzeuges, was ebenfalls aus praktischen Gesichtspunkten sehr wichtig ist, da der Platz in Fahrerkabinen auch seitlich häufig äußerst begrenzt ist.

Weiterhin ergibt sich der Vorteil, dass die Verstellgeschwindigkeit bei der erfindungsgemäßen Fahrzeug-Sitzanordnung bzw. der erfindungsgemäßen Verstelleinrichtung besser geregelt werden kann, was auch auf den kürzeren Abstand zum Sitzreferenzpunkt zurückzuführen ist. Hieraus ergibt sich ein angenehmeres Fahrgefühl für den Fahrer, da die erfindungsgemäße Fahrzeug-Sitzanordnung nicht als wackelig empfunden wird.

Für eine nicht im Schutzumfang der Ansprüche enthaltene Ausführung der Fahrzeug-Sitzanordnung, bei der die Verstelleinrichtung zwischen Fahrzeugsitz und Federpaket innerhalb der Fahrzeug-Sitzanordnung integriert ist, ergibt sich ferner der Vorteil, dass das gesamte System durch das Federpaket federgelagert ist, was ebenfalls für die Steuerung von Vorteil ist, da Schwingungen und Stöße vom Fahrzeug nicht aufgenommen werden müssen.

Ferner ist es bei einer nicht erfindungsgemäßen Ausführungsform möglich, dass die gesamte Steuerung der Anordnung im Modul integriert ist, wobei sich bei dieser zweiten Ausführungsform der weitere Vorteil ergibt, dass beispielsweise der Verstellmotor zusammen mit der Steuerung sowohl an der unteren als auch an der oberen ständig horizontal verbleibenden Platte des Moduls angeordnet werden kann.

Nachfolgend wird die Erfindung anhand der Zeichnung näher erläutert.

Es zeigt:
- Fig. 1: eine Vorderansicht einer erfindungsgemäßen Fahrzeug-Sitzanordnung,
- Fig. 2: eine der Fig. 1 entsprechende Darstellung einer Seitenansicht der Sitzanordnung gemäß Fig. 1,
- Fig. 3: eine schematisch vereinfachte und vergrößerte Darstellung des unteren Bereiches der Fahrzeug-Sitzanordnung gemäß Fig. 1 und Fig. 2, und
- Fig. 4 und 5: eine schematisch vereinfachte Darstellung einer zweiten Ausführungsform der erfindungsgemäßen Verstelleinrichtung.

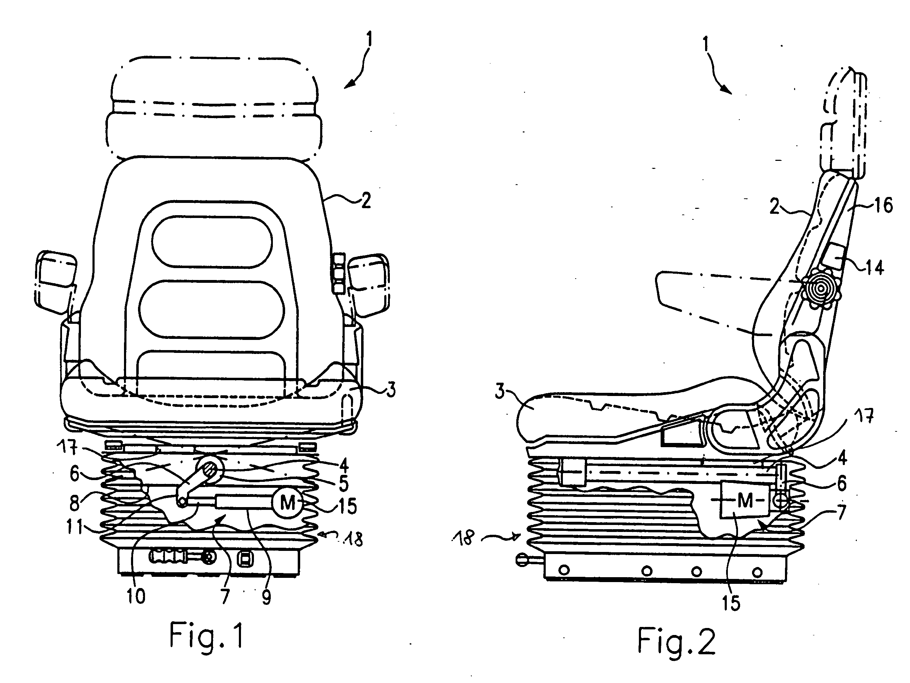

In den Fig. 1 und 2 ist eine erfindungsgemäße Fahrzeug-Sitzanordnung 1 dargestellt.

Der Sitz 2 der Sitzanordnung 1 ist auf einer unterhalb der Sitzfläche 3 gelegenen eine Drehachse bildenden Drehwelle 4 befestigt, die wiederum in einem Schwenklager 5 gelagert ist.

Am freien Ende der Drehschwelle 4 ist ein Anlenkhebel 6 befestigt. Wie die Zusammenschau der Fig. 1 und 2 verdeutlicht, greift am Anlenkhebel 6 eine Verstelleinrichtung bzw. Lageeinstelleinrichtung 7 zur selbsttätigen Verstellung des Fahrzeugsitzes 2 in die waagrechte Position entsprechend der Schräglage des Fahrzeugs ein.

Wie die Fig. 1 und 2 ferner verdeutlichen, ist bei dieser Ausführungsform die Verstelleinrichtung 7 innerhalb der Sitzanordnung 1 in deren Federpaket 18 angeordnet und weist im Beispielsfalle einen Stellzylinder 9 auf, dessen Kolbenstange 10 an einem Endbereich 11 des Anlenkhebels 6 mittels eines Drehzapfens 12 schwenkbar angelenkt ist. Das Gehäuse 13 des Stellzylinders 9 und ein vorzugsweise vorgesehener Motorantrieb 15 ist an einer oberen Federpaketplatte 8 des Sitzes 2 angebracht.

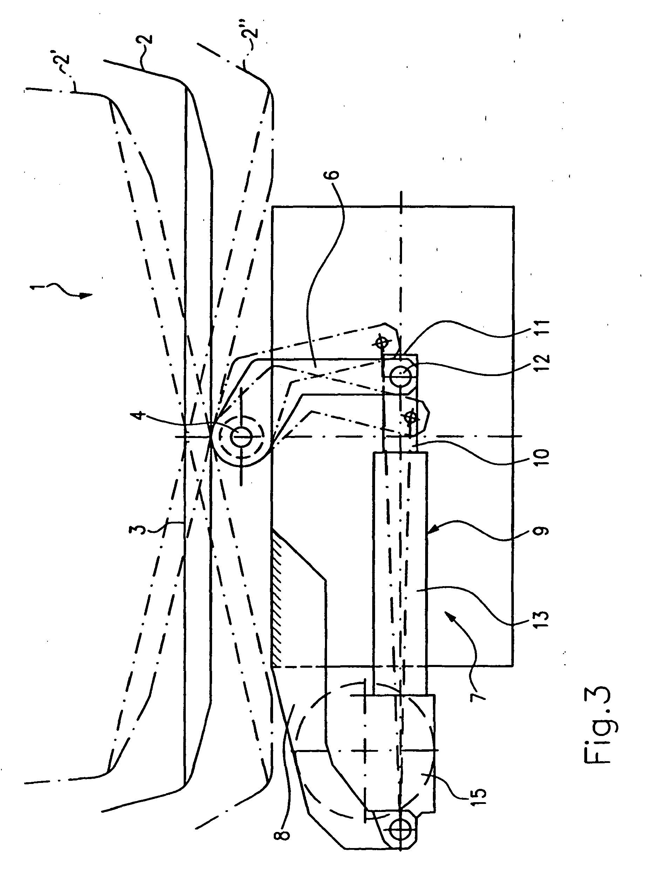

Eine an der Lehne 16 oder einem sonstigen sich schrägstellenden Teil des Fahrzeugsitzes 2 angebrachte elektronische Messeinrichtung 14, vorzugsweise in Form einer elektronischen Nivellierwaage, ermittelt die Schräglage des Fahrzeugsitzes 2 bzw. des nicht dargestellten Fahrzeuges und gibt dementsprechend Signale über Signalleitungen an eine Steuerung ab. Durch diese Signalverbindung werden Druckanschlüsse des Stellzylinders 9 angesteuert, sodass die Kolbenstange 10 je nach Schrägstellung des Fahrzeuges ein- oder ausgefahren wird. Die daraus resultierenden Stellungen des Fahrzeugsitzes 2 sind durch die strichpunktierten Sitzstellungen 2' bzw. 2'' in Fig. 3 symbolisiert.

Zur Ermittlung der Schräglage gibt die elektronische Nivellierwaage 14 bei beginnender Schräglage ein Signal z.B. an ein elektrisch gesteuertes Wegeventil ab. Das Wegeventil regelt den Ölstrom zum Stellzylinder 9 proportional zur Schräglage des Fahrzeugs. Somit ist es möglich, mittels der Verstelleinrichtung 7 den Fahrzeugsitz 2 in Abhängigkeit von der Schräglage des Fahrzeugs in waagerechte Position zu verschwenken. Dies ist, wie gesagt, in Fig. 3 durch die strichpunktierten Linien symbolisiert.

Um eine weitere Platzersparnis für die Gesamtanordnung zu erreichen, ist es möglich, die Nivelierwaage 14 nicht an der Rückenlehne, sondern unter dem Fahrersitz 2 anzuordnen. Dies ist in den Fig. 1 und 2 durch den zusätzlichen Block 17 dargestellt. Da der Fahrersitz 2 nach vorne geschoben werden kann, ist bei dieser Anordnung die freie Zugänglichkeit der Nivelierwaage 17 gewährleistet, wenn der Fahrersitz 2 aus der in Fig. 2 dargestellten Position gemäß der gewählten Darstellung in Fig. 2 nach links vorne geschoben wird. Somit ist auch bei dieser Anordnung die freie Zugänglichkeit für Einbau-, Umbau- oder Wartungsarbeiten gegeben.

Ferner ist es, entsprechend einer Ausführungsform der Fahrzeug-Sitzanordnung die nicht im Schutzumfang der Ansprüche enthalten ist, möglich, die gesamte Verstell- bzw. Lageeinstelleinrichtung 7 als Modul auszubilden, der zwischen dem Fahrzeugsitz 2 und dem Federpaket 18 angeordnet werden kann. Ein derartiges Modul kann sowohl als Nachrüstteil wie auch als werkseitig bereits in der Sitzanordnung 1 angeordnetes Teil ausgebildet sein.

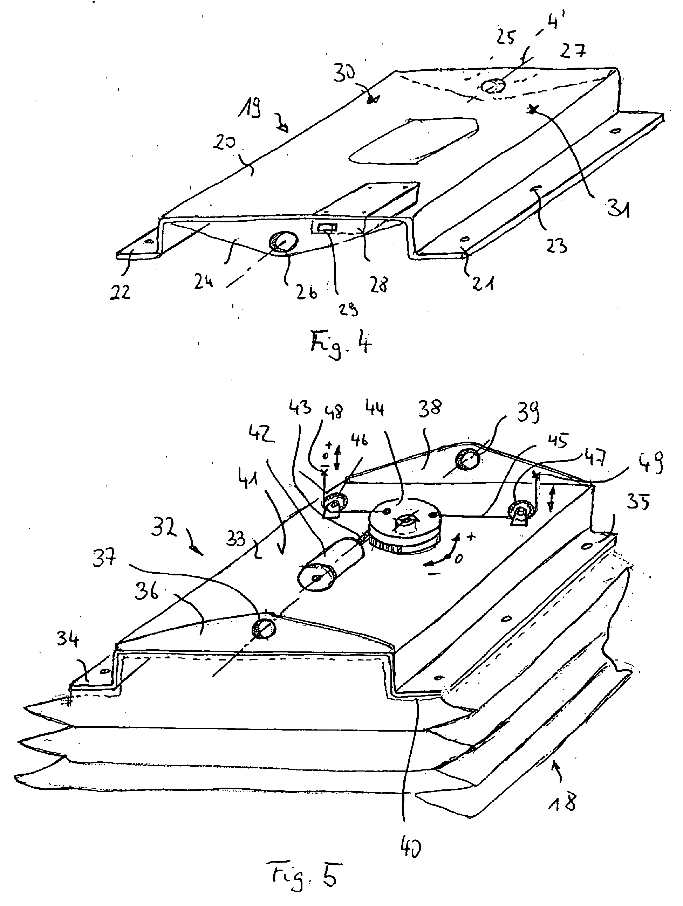

Ein Beispiel für ein derartiges Modul wird nachfolgend anhand der Fig. 4 und 5 erläutert, wobei zur Vereinfachung der Darstellung das Federpaket 18 nur schematisch angedeutet ist und der Fahrzeugsitz 2 selber nicht dargestellt ist.

Gemäß Fig. 4 weist das Modul eine obere Platte 19 auf, die ein im Querschnitt U-förmiges Basisteil 20 umfasst, an dessen freien Schenkeln im rechten Winkel streifenförmige Befestigungslaschen 21 und 22 vorgesehen sind, die beispielsweise mit Verstellschienen der Sitzschale oder anderen geeigneten Teilen der Sitzschale verbunden werden können. Hierfür sind beispielsweise Schraub- oder andere Verbindungsmöglichkeiten denkbar, die in Fig. 4 durch die Ausnehmungen in den Laschen 21 bzw. 22 symbolisiert sind, von denen eine repräsentativ mit der Bezugsziffer 23 gekennzeichnet ist.

An den Stirnseiten des Basisteiles 20 sind ferner Lagerplatten 24 bzw. 25 vorgesehen, die Ausnehmungen bzw. Lager 26 und 27 für die Drehwelle 4 aufweisen, die durch die eingezeichnete Schwenkachse 4' symbolisiert ist. Es ist hierbei möglich, eine durchgehende Drehwelle oder auch Wellenstümmel zu verwenden.

Bei der dargestellten nicht erfindungsgemäßen Ausführungsform ist im Innenraum des Basisteils 20 eine Steuerung 28 mit einem Ein-/Ausschalter 29 vorgesehen und ferner sind zwei Befestigungspunkte 30 und 31 schematisch angedeutet, an denen ein Verbindungselement angreift, das nachfolgend anhand der Fig. 5 erläutert werden wird.

In Fig. 5 ist eine untere Platte 32 des Moduls dargestellt, deren Aufbau mit einem U-förmigen Basisteil 33 und Befestigungslaschen 34 und 35 dem Aufbau der oberen Platte 19 entspricht.

An den Stirnseiten des Basisteiles 20 sind allerdings nach oben weisende Lagerlaschen 36 und 38 mit einem Lager bzw. einer Ausnehmung 37 bzw. 39 vorgesehen. Beim Zusammensetzen der oberen Platte 19 und der unteren Platte 32 greift dann die in Fig. 4 angedeutete Drehwelle 4' jeweils durch die Ausnehmungen 26 und 37 bzw. 27 und 39, so dass die obere und die untere Platte schwenkbeweglich miteinander verbunden werden können. Der Abstand der Platten 19 und 32 beträgt in diesem Montagezustand vorzugsweise 50 mm.

In Fig. 5 ist ferner das Federpaket 18 angedeutet, das mit seiner oberen Federpaketplatte 40 über die Befestigungslaschen 34 und 35 mit der unteren Platte 32 verbindbar ist.

Auf der Oberfläche 41 des Basisteils 33 ist bei der dargestellten nicht erfindungsgemäßen Ausführungsform ein Verstellmotor 42 angeordnet, der beispielsweise über eine Kolbenstange oder ein Schneckengetriebe 43 mit einer Antriebsscheibe 44 verbindbar ist. Die Antriebsscheibe 44 wiederum steht mit einem Zugseil und einer Kette 45 in Verbindung, die in der dargestellten nicht erfindungsgemäßen Ausführungsform über Umlenkscheiben 46 und 47 läuft und mit ihren freien Enden 48 und 49 an den Befestigungspunkt 30 bzw. 31 der oberen Platte 19 anbringbar ist.

Das aus den Platten 19 und 32 zusammensetzbare Modul mit den zuvor beschriebenen Teilen der Verstelleinrichtung kann als kompaktes Nachrüstteil oder bei der Herstellung einer Sitzanordnung entsprechend einer Ausführungsform der Fahrzeug-Sitzanordnung, die nicht im Schutzumfang der Ansprüche enthalten ist, werkseitig zwischen Federpaket 18 und Sitz 2 angeordnet werden, um die eingangs beschriebene Einstellung in die Horizontallage entsprechend der durch die Nivellierwaage festgestellten Schräglage des Sitzes vornehmen.

Nachzutragen ist, dass die bei der zuvor beschriebenen nicht erfindungsgemäßen Ausführungsform gemäß Figur 4 und 5 U-förmig ausgebildeten Platten auch plane Platten sein können, was von den vorzufindenden Einbaubedingungen abhängt.

Ferner ist es möglich, die gesamte Anordnung der Verstelleinrichtung mit Endschaltern vorzusehen, die beispielsweise am Verstellmotor 42 oder an der Antriebsscheibe 44 angebracht werden können. Diese Endschalter begrenzen den Schwenkwinkel.

Ferner ist es möglich, die Verstelleinrichtung 7 mit einer Schutzabdeckung zu versehen, um Beschädigungen oder Verschmutzungen der Komponenten zu vermeiden.

## Patentansprüche

1. Fahrzeug-Sitzanordnung (1)
- mit einer unterhalb der Sitzfläche (3) eines Fahrzeugsitzes (2) gelegenen, eine Drehachse bildenden Drehwelle (4), um welche die Sitzfläche (3) relativ zum Fahrzeugaufbau verschwenkbar ist und
- mit einer Verstelleinrichtung (7) zur selbsttätigen Verstellung des Fahrzeugsitzes (2) in die waagerechte Position entsprechend der Schräglage des Fahrzeugs,
**dadurch gekennzeichnet,**
- **dass** die Fahrzeug-Sitzanordnung (1) ein Federpaket (18) aufweist und
- **dass** die Verstelleinrichtung (7) innerhalb der Fahrzeugsitzanordnung (1) in deren Federpaket (18) angeordnet ist.

2. Fahrzeug-Sitzanordnung (1) nach Anspruch 1, **dadurch gekennzeichnet, dass** die Drehwelle (4) und/oder eine Sitzschalenplatte des Fahrzeugsitzes (2) mit einem Anlenkhebel (6) drehfest verbunden ist, an dessen freiem Ende ein Stellorgan der Verstelleinrichtung (7) angreift, und dass die Drehwelle (4) und/oder die Sitzschalenplatte innerhalb des Fahrzeugsitzes (2) mit dem Anlenkhebel (6) verbunden ist.

3. Fahrzeug-Sitzanordnung nach Anspruch 1 oder 2, **dadurch gekennzeichnet, dass** am Fahrersitz (2) eine elektronische Nivellierwaage (14) montiert ist, die bei beginnender Schräglage ein Signal an ein elektrisch gesteuertes Wegeventil abgibt.

4. Fahrzeug-Sitzanordnung nach Anspruch 3, **dadurch gekennzeichnet, dass** eine akustische oder optische Anzeigeeinrichtung zur Anzeige der Erreichung einer maximalen Schräglage vorgesehen ist.

5. Fahrzeug-Sitzanordnung nach einem der Ansprüche 1 bis 4, **dadurch gekennzeichnet, dass** die Verstelleinrichtung (7) mit einer Einrichtung zur Erfassung der Fahrzeuggeschwindigkeit gekoppelt ist und die Sitzverstellung in Abhängigkeit von der Fahrzeuggeschwindigkeit durchführt.

6. Fahrzeug-Sitzanordnung nach Anspruch 2 oder nach einem der Ansprüche 3-5, sofern auf Anspruch 2 ruckbezogen, **dadurch gekennzeichnet, dass** die Verstelleinrichtung (7) einen Druckmittel-Stellzylinder (9) aufweist, der an einem Ende am Fahrzeugsitz (2) vorzugsweise schwenkbeweglich befestigt ist und dessen Kolbenstange (16) am Anlenkhebel (6) angreift.

7. Fahrzeug-Sitzanordnung nach Anspruch 6, **dadurch gekennzeichnet, dass** der Druckmittel-Stellzylinder (9) ein Hydraulik- oder Pneumatikzylinder ist.

8. Fahrzeug-Sitzanordnung nach einem der Ansprüche 1 bis 5, **dadurch gekennzeichnet, dass** die Verstelleinrichtung (7) einen elektrisch betätigten Stellzylinder aufweist, der mit einer fahrzeugeigenen oder separaten Stromquelle verbunden ist.

## Claims

1. A vehicle seat arrangement (1), comprising
- a rotary shaft (4) arranged below the seating (3) of a vehicle seat (2) and forming a rotary axis (4) about which the seating (3) is pivotable with respect to the vehicle structure, and
- an adjusting device (7) for automatically adjusting the vehicle seat (2) into the horizontal position according to the inclination of the vehicle,
**characterized in that**
- the vehicle seat arrangement (1) comprises a spring assembly (18), and
- the adjusting device (7) is arranged inside the vehicle seat arrangement (1) in the spring assembly (18) thereof.

2. The vehicle seat arrangement (1) of claim 1, **characterized in that** the rotary shaft (4) and/or a seat pan plate of the vehicle seat (2) is/are rotationally fixedly connected to a joint lever (6), at the free end of which an actuator of the adjusting device (7) engages, and that the rotary shaft (4) and/or the seat pan plate of the vehicle seat (2) is/are connected to the joint lever (6).

3. The vehicle seat arrangement of claim 1 or 2, **characterized in that** an electronic spirit level (14) is attached to the vehicle seat (2), said spirit level outputting a signal to an electronically controlled directional valve upon a beginning inclination.

4. The vehicle seat arrangement of claim 3, **characterized in that** an acoustic or optical display means is provided for displaying the attainment of a maximum inclination.

5. The vehicle seat assembly of one of claims 1 to 4, **characterized in that** the adjusting device (7) is coupled to means for detecting the vehicle speed and performs the adjusting of the seat in dependence of the vehicle speed.

6. The vehicle seat assembly of claim 2 or one of claims 3 to 5 as far as referring to claim 2, **characterized in that** the adjusting device (7) comprises a pressure medium adjust cylinder (9) which is attached preferably pivotally at one end at the vehicle seat (2) and the piston rod (16) of which engages at the joint lever (6).

7. The vehicle seat assembly of claim 6, **characterized in that** the pressure medium adjust cylinder (9) is a hydraulic or pneumatic cylinder.

8. The vehicle seat assembly of one of claims 1 to 5, **characterized in that** the adjusting device (7) comprises an electrically actuated adjust cylinder which is connected to an on-board or separate current source.

## Revendications

1. Système de siège de véhicule (1)
- avec un arbre rotatif (4) placé au-dessous de la surface de siège (3) d'un siège de véhicule (2), formant un axe de rotation, autour duquel la surface de siège (3) peut être pivotée par rapport à la carrosserie de véhicule, et
- avec un dispositif de réglage (7) pour le réglage automatique du siège de véhicule (2) dans la position horizontale selon la position inclinée du véhicule,
**caractérisé en ce que**
- le système de siège de véhicule (1) présente un bloc-ressort (18) et
- le dispositif de réglage (7) est disposé dans le système de siège de véhicule (1) dans son bloc-ressort (18).

2. Système de siège de véhicule (1) selon la revendication 1, **caractérisé en ce que** l'arbre rotatif (4) et/ou une plaque de coque du siège de véhicule (2) est reliée à rotation à un levier articulé (6), sur l'extrémité libre duquel un organe de réglage du dispositif de réglage agit, et **en ce que** l'arbre rotatif (4) et/ou la plaque de coque de siège à l'intérieur du siège de véhicule (2) est reliée au levier articulé (6).

3. Système de siège de véhicule selon la revendication 1 ou 2, **caractérisé en ce qu'**une nivelle (14) électronique est montée sur le siège du conducteur (2), laquelle délivre au début de la position inclinée, un signal au distributeur commandé électriquement.

4. Système de siège de véhicule selon la revendication 3, **caractérisé en ce qu'**un dispositif indicateur acoustique ou optique est prévu pour indiquer l'atteinte d'une position inclinée maximale.

5. Système de siège de véhicule selon l'une quelconque des revendications 1 à 4, **caractérisé en ce que** le dispositif de réglage (7) est couplé à un dispositif de détection de la vitesse de véhicule et réalise le réglage de siège en fonction de la vitesse du véhicule.

6. Système de siège de véhicule selon la revendication 2 ou l'une quelconque des revendications 3 à 5, dans la mesure où elle ne concerne pas la revendication 2, **caractérisé en ce que** le dispositif de réglage (7) présente un vérin de réglage à fluide sous pression (9) qui est fixé à pivotement au niveau d'une extrémité sur le siège de véhicule (2) et dont la tige de piston (16) agit sur le levier articulé (6).

7. Système de siège de véhicule selon la revendication 6, **caractérisé en ce que** le vérin de réglage à fluide sous pression (9) est un vérin hydraulique ou pneumatique.

8. Système de siège de véhicule selon l'une quelconque des revendications 1 à 5, **caractérisé en ce que** le dispositif de réglage (7) présente un vérin de réglage actionné électriquement qui est relié à une source de courant propre au véhicule ou séparée.
